# EUROPÄISCHE PATENTSCHRIFT

(11) **EP 0 240 929 B1**
(45) Veröffentlichungstag und Bekanntmachung des Hinweises auf die Patenterteilung: **17.07.1996**
(21) Anmeldenummer: 87104847.6
(22) Anmeldetag: 02.04.1987
(51) Int. Cl.: C02F 3/10

(54) **Trägermaterial zur Imobilisierung von Mikroorganismen**
Carrier for the immobilization of micro-organisms
Support pour l'immobilisation de micro-organismes

(30) Priorität: 07.04.1986 DE 3611582
(43) Veröffentlichungstag der Anmeldung: 14.10.1987
(73) Patentinhaber: HERDING GmbH Entstaubungsanlagen, D-92224 Amberg (DE)
(72) Erfinder: Herding, Walter, D-8450 Amberg (DE); Rausch, Walter, Dr.-Ing., D-8503 Altdorf bei Nbg. (DE)
(74) Vertreter: Klunker . Schmitt-Nilson . Hirsch

(56) Entgegenhaltungen:
- EP-A- 0 124 438
- FR-A- 2 340 909
- FR-A- 2 461 687
- FR-A- 2 464 996

## Beschreibung

Die Erfindung betrifft Mikroorganismen-Trägermaterial (1) mit einem für die Immobilisierung von Mikroorganismen ausgebildeten Aufbau zum Einsatz bei der biologischen Entfernung von Verunreinigungen aus flüssigen oder gasförmigen Medien, wobei das formstabile Trägermaterial (1) mindestens aus einer ersten Komponente in Form mikroporöser Körner und einer tragenden zweiten Komponente besteht, in der die mikroporösen Körner eingebettet sind.

Um Verunreinigungen gelöster, flüssiger oder gasförmiger Medien aus Gasgemischen auszuscheiden, ist es bekannt, für Stoffumwandlungen Mikroorganismen einzusetzen, die mit dem Substrat das ein Gas oder eine Flüssigkeit sein kann, kontaktiert werden. Die Flüssigkeit kann dabei Wasser sein, in dem Verunreinigungen durch gelöste Gase oder Feststoffe oder in dem andere Flüssigkeiten oder Feststoffe das Substrat für die Mikroorganismen bilden. Ähnliches gilt auch für Gase als Medium, die z. B. durch Geruchsstoffe verunreinigt sind oder andere Gasen, die als Nährboden für den mikrobielen Abbau dienen.

Der Kontakt zwischen den abzubauenden Stoffen und den Mikroorganismen kann dabei auf verschiedene Weise erfolgen. Insbesondere bei flüssigen Substraten können die Mikroorganismen frei im Medium umherschwimmen. Die Mikroorganismen können aber auch mit Trägerstoffen verbunden, also immobilisiert werden und sich mit diesen Trägerstoffen in der Flüssigkeit, z. B. in einer Wirbelschicht, bewegen. Auch können diese Mikroorganismen ortsfest in einem Reaktor liegen (Festbett) und dort vom Medium durchströmt werden. Untersuchungen haben jedoch ergeben, daß besonders die Immobilisierung der Mikroorganismen den besseren Reinigungsgrad bringt, weil das von den Mikroorganismen erreichbare Umfeld des Mediums größer ist und demzufolge diese Organismen ein größeres "Freßfeld" vorfinden können.

Die am häufigsten untersuchten Möglichkeiten der Immobilisierung zwecks Abbau von Verunreinigungen in Medien bzw. Substraten sind:
a) Der Einschluß von Zellen in vernetzten Gelen oder membranartigen Gebilden,
b) die interzellulare Vernetzung,
c) die kovalente Fixierung von Zellen an organischem Material,
d) die Adsorption von Zellen auf der Oberfläche eines geeigneten Trägermaterials.

Bei der Adsorption von Mikroorganismen auf Trägermaterialien werden physikalische Haftmechanismen wirksam, um die Mikroorganismen festzuhalten. Der wohl bekannteste Anwendungsfall sind die Füllkörper (Tropfkörper) in Abwasserreinigungsanlagen, auf denen die Mikroorganismen sitzen und ein Micel bilden. Die Füllkörper werden derzeit entweder aus Plastikmaterial mit besonderen Formen, jedoch ohne Poren ausgeführt oder aus vulkanischem, porösem Naturgestein hergestellt.

Sobald jedoch die an glatten Oberflächen haftenden Mikroorganismen in anderen Reaktoren eingesetzt werden sollen, bei denen äußere Kräfte den physikalischen Haftkräften entgegenwirken, wie z. B. die Scherkräfte bewegter Flüssigkeit in Rührwerksreaktoren, reichen die Haftkräfte an den glatten Flächen der Polypropylentropfkörper nicht mehr aus, so daß die Mikroorganismen weggespült werden.

Eine entscheidende Verbesserung wird durch die Verwendung poröser Träger erzielt, auf denen die Mikroorganismen in die Poren hineinwachsen und damit auch besseren Halt finden können. Dies ist verwirklicht in dem obengenannten, porösen Vulkangestein, dessen Nachteil jedoch in seiner hohen Dichte gegenüber dem Abwasser liegt und in den daraus resultierendem hohen Gewicht, das größere Reaktoren aufzunehmen haben und das bei einer Entleerung bewältigt werden muß.

Weiterhin bekannt geworden ist auch ein poröser Schaumstoff mit einer Dichte von 10 bis 200 kg/m³ und offenen Makroporen von 0,1 bis 5 mm, der als Trägerwerkstoff dient. Die niedere Dichte ermöglicht zwar eine leichte Umwälzung in dem zu behandelnden Substrat, jedoch sind auch bei der Verwendung in einem Festbettreaktor geeignete Befestigungs- bzw. Haltevorrichtungen nötig, um ein ständiges Aufschwimmen und ungewolltes Austragen aus dem Reaktor zu unterbinden.

Schließlich ist aus dem Dokument EP - A - 0 124 438 ein Mikroorganismen-Trägermaterial mit den im einleitenden Absatz der Beschreibung genannten Merkmalen bekannt. Dieses bekannte Trägermaterial wird dadurch hergestellt, daß ein Gemisch aus Polyvinylchlorid-Teilchen, Aktivkohle-Teilchen und Blähmittel-Teilchen unter Erhitzen und Aufschäumen extrudiert wird. Infolgedessen bildet im extrudierten Produkt das Polyvinylchlorid Zellwände von durch das Aufschäumen gebildeten Zellen. Die Aktivkohle-Teilchen sollen zwar nicht mit einem Polyvinylchlorid-Film überzogen werden, aber dies dürfte aufgrund des Herstellungsverfahrens im wesentlichen nur für die an der Außenoberfläche des Produkts befindlichen Aktivkohle-Teilchen erreichbar sein. Es ist nicht beschrieben, daß das Produkt eine durchgehend offenporige bzw. offenzellige Struktur hätte.

Der Erfindung liegt die Aufgabe zugrunde, ein Trägermaterial dergestalt zu schaffen, daß es eine hohe Adsorptionsfähigkeit für die Mikroorganismen aufweist und zudem in seinen Makroporen eine günstige Vermehrung der Mikroorganismen fördert und zusätzlich in den Mikroporen Nährstoffe für die Mikroorganismen speichert.

Zur Lösung dieser Aufgabe ist das Mikroorganismen-Trägermaterial erfindungsgemäß dadurch gekennzeichnet, daß beim einsatzfertigen Trägermaterial (1) die zweite Komponente aus gröberen Kunststoff-Körnern oder gröberen Körnern eines anderen Stoffs mit klebefähiger Oberfläche besteht;
und daß die Körner der zweiten Komponente mit den darin verteilt eingebetteten mikroporösen Körnern der ersten Komponente ein makroporöses, versintertes oder verklebtes Grundgerüst bilden, bei dem die Gesamtheit sowohl der Mikroporen als auch der Makroporen für die Immobilisierung von Mikroorganismen und für das zu behandelnde Medium zugänglich sind.

Durch diese Maßnahmen wird ein Trägermaterial geschaffen, das entspechend dessen Einsatzgebietes verschiedentlich, geometrisch dimensioniert und mit einem entsprechend großen Raumangebot für die Aufnahme der Mikroorganismen ausgeführt werden kann. Auch kann das Raumgewicht des Trägermaterials durch entsprechende Porösität den gegebenen Anforderungen entsprechend ausgelegt und insbesondere bei dessen Verwendung in Flüssigkeiten als Schwimm-, Schweb- oder Sinkkörper ausgeführt werden. Durch die Möglichkeit des Einschließens von Zweitmaterialien in das Erstmaterial des Trägerkörpers ist es denkbar, diesem auch solche Materialien zuzusetzen, die insbesondere das Wachstum der Mikroorganismen begünstigen.

Auch ist festgestellt worden, daß die Nachteile bisher bekannter Trägermaterialien mit der Erfindung dadurch vermieden werden können, daß
a) ein relativ grobkörniges Grundmaterial, das wie z. B. ein Thermoplast oder ein mit einer klebenden Umhüllung versehener anderer Stoff unter Einwirkung von Temperatur und/oder Druck zu einem grobporösen Materialgerüst mittels eines Sinter- oder Klebevorgangs geformt werden kann. In einem derartigen Stoff mit einer Porenweite von etwa 10 bis 200 µm können sich kleinste bis größte Mikroorganismen ansiedeln,
b) ein Zusatzmaterial, das von vornherein sehr feine Poren besitzt, wie z. B. Aktivkohle mit Porenweiten von 0 - 500 Å oder ein gebranntes Tonmaterial mit Porenweiten bis 10⁻⁷m. Es ist allgemein bekannt, daß beispielsweise Aktivkohle bestens zur Adsorption bzw. Absorption sowohl kleiner Mikroorganismen wie auch Schadstoffen geeignet ist und infolge ihrer großen, inneren Oberflächen und Porenzahlen erhebliche Mengen speichern kann. Nachteilig ist bei Einwirken äußerer Kräfte, seien es Strömungskräfte oder Stöße mit anderen Teilen, die hohe Abriebempfindlichkeit. Durch ein Einbetten des mikroporösen Stoffes in das makroporöse Grundgerüst wird der Abtrieb weitgehend vermieden und die Speicherwirkung kommt voll zur Geltung. Vor allem stärkere Schwankungen von Schadstoffen, die zwar von den Mikroorganismen abgebaut werden, die aber in zu hoher Konzentration auf die Mikroorganismen toxisch wirken, können in den Mikroporen gepuffert und später verarbeitet werden,
c) weitere zusätzliche Stoffe, die für die Stoffwechselvorgänge der Mikroorganismen vorteilhaft sind, können in einem gewissen Maße zugegeben werden. So ist bekannt, daß z. B. Nickel in feinpulvriger Form katalytisch bei Stoffumsetzungen wirksam wird. Daneben kann auch die Dichte des Trägerwerkstoffes in gewissen Bereichen beeinflußt werden. Es konnte ein Anteil von ca. 10 % Nickelpulver realisiert werden.

Weitere vorteilhafte Weiterentwicklungen der Erfindung können den verbleibenden Unteransprüchen entnommen werden.

In der Zeichnung sind zwei der möglichen Ausführungsbeispiele der Erfindung schematisch dargestellt. Es zeigt:
- Fig. 1: Eine Seitenansicht auf einen Formkörper mit zwei verschiedenartig ausgeführten Trägermaterialien,
- Fig. 2: einen Schnitt durch den Formkörper gemäß Fig. 1 in der Ebene II - II,
- Fig. 3: einen Schnitt durch den Formkörper gemäß Fig. 1 in der Ebene III - III und
- Fig. 4: einen zylinderförmigen Formkörper.

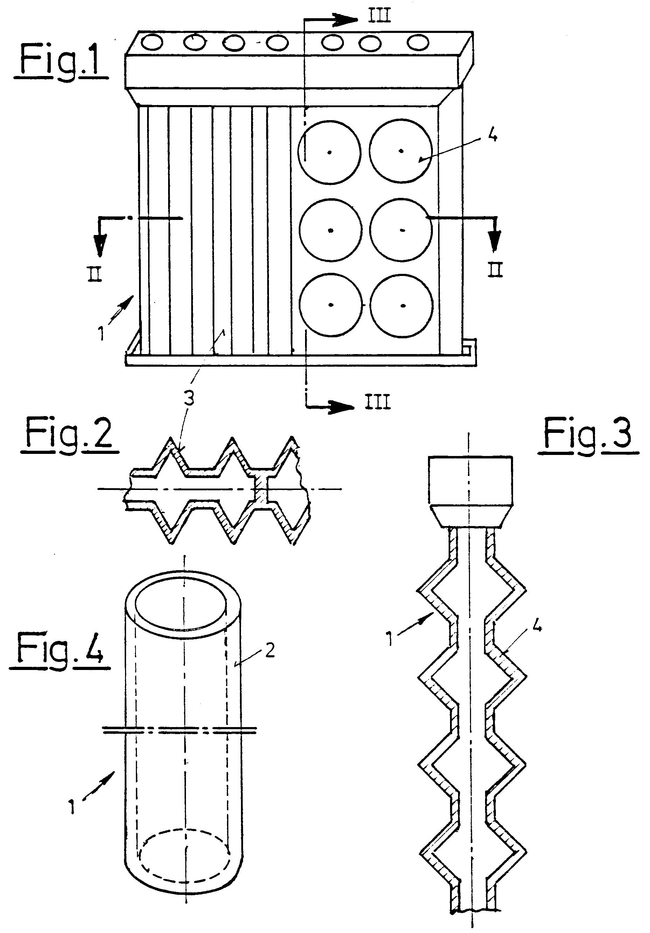

Das Trägermaterial 1 gem. der Erfindung wird im wesentlichen von einem Formkörper gebildet, der aus mindestens zwei Werkstoffkomponenten besteht, von denen die eine ein polymerisierter Kunststoff und die andere z. B. eine Aktivkohle ist. Die beiden Komponenten, von denen der Kunststoff ein Pulver und die Aktivkohle ein Grieß sein können, werden in einem vorher festgelegten Verhältnis miteinander gemischt und anschließend in ein Formwerkzeug eingefüllt. In diesem Formwerkzeug werden die beiden Komponenten durch Sintern miteinander verbunden und zwar in der Art, daß größere und kleinere Öffnungen, d.h. Poren, zwischen den miteinander verbundenen Werkstoffteilen verbleiben. Diese beiden Werkstoffkomponenten können dabei zu beliebigen, geometrischen Konfigurationen annehmenden Formkörpern geformt werden, wie dies z. B. in den Fig. 1 und 4 dargestellt ist.

Bei dieser Verbindungsart bzw. dem Sintervorgang der Werkstoffkomponenten entsteht ein Material, das einerseits Makroporen, herrührend aus der Kornform von Kunststoff und Aktivkohle, besitzt, das andererseits aber in der Aktivkohle auch außerordentlich mikroporös ist. Beide Eigenschaften fördern die Immobilisierung von Mikroorganismen wesentlich. Dies zeigen z. B. Untersuchungen, bei denen die Extinktion in Abhängigkeit von der Zeit festgestellt wurde. Bereits nach wenigen Stunden ist ein wesentlicher Abfall, gleichbedeutend mit einem hohen Bakterienwachstum, festzustellen.

Darüber hinaus besitzt das auf diese Weise gewonnene Trägermaterial 1 eine Dichte, die sehr nahe unter 1,0 liegt und damit in üblichen Substratflüssigkeiten, wobei es fast ganz eintaucht, schwimmt.

Die Verwendung des Trägermaterials 1 im Wirbelbett erfordert einen nur geringen Energieaufwand und eine geringe Strömungsgeschwindigkeit, so daß auch deren Scherkräfte auf die Feststoffe ebenfalls verhältnismäßig gering sind.

Eine weitere Variation des erfindungsgemäßen Trägermaterials 1 stellt ein poröser Körper dar, zu dessen Anteilen an thermoplastischem Kunststoff und Aktivkohle, vor dem Sintern, noch eine Menge von bis zu max. 10 Gewichts % an Metallpulver (z. B. Nickel) beigegeben wird. Auf diese Weise läßt sich die Dichte bis auf einen Wert von knapp über 1,0 (spezifisches Gewicht) erhöhen und damit das Schwimmverhalten beeinflussen.

Darüber hinaus kann das Metallpulver zusätzlich eine stoffwechsel-begünstigende Wirkung entfalten. Es ist z. B. bekannt, daß Nickel bei bestimmten Stoffwechselvorgängen katalytisch wirkt.

Ein weiteres Einsatzgebiet ist in der mikrobiellen Reinigung von Abluft zu sehen, die biotechnisch abbaubare Bestandteile enthält. Hierbei wirkt der beschriebene Plastik/Aktivkohle-Sinterwerkstoff ebenfalls als Trägermaterial 1 für Mikroorganismen.

Dieses Trägermaterial 1 kann in der Art eines schüttfähigen Granulates, bevorzugt aber auch in verschiedenen, geometrisch auch komplizierteren und formstabilen Formen ausgeführt werden. In den Figuren sind einige Beispiele angegeben, so etwa zylindrisch 2, Kastenförmig 3, Ziehharmonika 4 u. a.

Die geometrische Konfiguration eines Trägermaterials 1 bzw. Formkörpers wird, sowohl beim Einsatz in Flüssigkeiten als auch in Gasen weitgehend von den Einbauverhältnissen bestimmt, so daß auf diese hier nicht weiter eingegangen zu werden braucht.

## Patentansprüche

1. Mikroorganismen-Trägermaterial (1) mit einem für die Immobilisierung von Mikroorganismen ausgebildeten Aufbau, zum Einsatz bei der biologischen Entfernung von Verunreinigungen aus flüssigen oder gasförmigen Medien, wobei das formstabile Trägermaterial (1) mindestens aus einer ersten Komponente in Form mikroporöser Körner und einer tragenden zweiten Komponente besteht, in der die mikroporösen Körner eingebettet sind,
dadurch gekennzeichnet,
daß beim einsatzfertigen Trägermaterial (1) die zweite Komponente aus gröberen Kunststoff-Körnern oder gröberen Körnern eines anderen Stoffs mit klebefähiger Oberfläche besteht;
und daß die Körner der zweiten Komponente mit den darin verteilt eingebetteten mikroporösen Körnern der ersten Komponente ein makroporöses, versintertes oder verklebtes Grundgerüst bilden, bei dem die Gesamtheit sowohl der Mikroporen als auch der Makroporen für die Immobilisierung von Mikroorganismen und für das zu behandelnde Medium zugänglich sind.

2. Mikroorganismen-Trägermaterial (1) nach Anspruch 1, dadurch gekennzeichnet, daß die Körner der zweiten Komponente aus thermoplastischem Kunststoff bestehen.

3. Mikroorganismen-Trägermaterial (1) nach Anspruch 1 oder 2, dadurch gekennzeichnet, daß die mikroporösen Körner der ersten Komponente aus Aktivkohle oder mikroporösem Tonmaterial bestehen.

4. Mikroorganismen-Trägermaterial (1) nach einem der Ansprüche 1 bis 3, dadurch gekennzeichnet, daß es maximal 10 Gewichtsprozente Metallpulver enthält, das die Entfernung von Verunreinigungen aus dem zu behandelnden Medium katalythisch begünstigt.

5. Mikroorganismen-Trägermaterial (1) nach einem der Ansprüche 1 bis 4, dadurch gekennzeichnet, daß seine Dichte nahe der Dichte des zu behandelnden flüssigen Mediums liegt.

## Claims

1. A microorganism carrier material (1) comprising a structure suitable for the immobilization of microorganisms, for use in biological removal of impurities from liquid or gaseous media, with the inherently stable carrier material (1) consisting at least of a first component in the form of microporous grains and a supporting second component having the microporous grains embedded therein,
characterized in that, in the carrier material (1) ready for use, the second component consists of coarser plastics grains or coarser grains of a different substance having a bonding surface;
and in that the grains of the second component having the microporous grains of the first component embedded therein in distributed manner constitute a macroporous sintered or bonded basic structure in which the entirety both of the micropores and of the macropores are accessible for immobilizing microorganisms and for the medium to be treated.

2. A microorganism carrier material (1) according to claim 1,
characterized in that the grains of the second component consist of thermoplastic plastics material.

3. A microorganism carrier material (1) according to claim 1 or 2,
characterized in that the microporous grains of the first component consist of activated carbon or microporous clay material.

4. A microorganism carrier material (1) according to any of claims 1 to 3,
characterized in that it contains a maximum of 10 % by weight of metal powder catalytically enhancing the removal of impurities from the medium to be treated.

5. A microorganism carrier material (1) according to any one of claims 1 to 4,
characterized in that its density is close to the density of the liquid medium to be treated.

## Revendications

1. Support pour les micro-organismes (1) présentant une structure formée pour l'immobilisation de micro-organismes, destiné à une utilisation pour l'élimination biologique d'impuretés de milieux liquides ou gazeux, étant entendu que le support (1) présentant une stabilité de forme serait constitué d'au moins un premier composant sous forme de grains microporeux et un deuxième comportant porteur, dans lequel les grains microporeux sont incorporés, caractérisé en ce que :
pour le support (1) prêt à l'emploi, le deuxième composant est constitué de grains relativement gros en matière synthétique ou de grains relativement gros en une autre matière ayant une surface collable ; et
les grains du deuxième composant avec les grains microporeux du premier composant incorporés de façon répartie dans les premiers forment une structure de base frittée ou collée macroporeuse, dans laquelle l'ensemble tant des micropores que des macropores est accessible pour l'immobilisation des micro-organismes et pour le milieu à traiter.

2. Support pour les micro-organismes (1) selon la revendication 1, caractérisé en ce que les grains du deuxième composant sont constitués de matière synthétique thermoplastique.

3. Support pour les micro-organismes (1) selon la revendication 1 ou 2, caractérisé en ce que les grains microporeux du premier composant sont constitués de charbon actif ou de matière argileuse microporeuse.

4. Support pour les micro-organismes (1) selon l'une des revendications 1 à 3, caractérisé en ce qu'il contient au maximum 10 % en masse d'une poudre métallique qui favorise catalytiquement l'élimination d'impuretés du milieu à traiter.

5. Support pour les micro-organismes (1) selon l'une des revendications 1 à 4, caractérisé en ce que sa masse volumique est proche de la masse volumique du milieu liquide à traiter.
